# EUROPÄISCHE PATENTSCHRIFT

(11) **EP 3 263 957 B1**
(45) Veröffentlichungstag und Bekanntmachung des Hinweises auf die Patenterteilung: **28.11.2018**
(21) Anmeldenummer: 17178295.6
(22) Anmeldetag: 28.06.2017
(51) Int. Cl.: F16K 11/065

(54) **MOLCHBARES LEITUNGSVENTIL**
PIGGABLE LINE VALVE
SOUPAPE EN LIGNE POUVANT ÊTRE RACLÉE

(30) Priorität: 28.06.2016 DE 102016111788
(43) Veröffentlichungstag der Anmeldung: 03.01.2018
(73) Patentinhaber: S+J Armaturen GmbH, 22145 Hamburg (DE)
(72) Erfinder: Skibowski, Martin, 22147 Hamburg (DE)
(74) Vertreter: Hauck Patentanwaltspartnerschaft mbB

(56) Entgegenhaltungen:
- EP-A1- 0 761 592
- DE-A1-102010 024 871
- DE-T2- 69 729 053
- DE-U1- 29 603 818

## Beschreibung

Die Erfindung betrifft ein molchbares Leitungsventil mit einem Schieber zur wahlweisen Verbindung zweier Leitungen.

In der chemischen Industrie, der Lebensmittelindustrie wie auch in der Mineralöl-, Lack- und Farbindustrie ist eine vollständige Reinigung der zum Materialtransport verwendeten Rohrleitungen sowie Armaturen von größter Bedeutung. Für eine möglichst vollständige Reinigung werden in den Rohrleitungen sogenannte Molche geführt. Diese an den Querschnitt der Rohrleitungen angepassten Reinigungsgeräte werden durch Druckunterschiede, beispielsweise mit Wasser oder Druckluft, durch die Rohrleitungen geführt. Der Molchkörper liegt dabei derart dichtend an der Innenwand der Rohrleitung an, dass er Rückstände des zuvor in den Leitungen geführten Produkts mitnimmt. Auch kann ein Molch zur Trennung zweier aufeinander folgender Produktchargen verwendet werden. Er kann in diesem Fall mit dem Produktstrom durch die Leitungen geführt werden.

In den Rohrleitungen angeordnete Armaturen, wie beispielsweise Ventile, sind im Idealfall ebenfalls molchbar ausgebildet. Deren Leitungsquerschnitt kann also so weit geöffnet werden, dass ein Molch hindurchgeführt und der entsprechende Ventilabschnitt somit gereinigt werden kann.

Aus DE 10 2010 024 871 A1 ist ein molchbares Mehrwegeventil mit einem zylindrischen Gehäuse bekannt. Dieses Ventil ist zur Verbindung mit zwei senkrecht zueinander verlaufenden und zueinander in der Höhe versetzten Leitungen ausgebildet. Durch ein in dem Gehäuse drehbar gelagertes zylindrisches Ventilglied kann eine Verbindung zwischen den beiden Leitungen hergestellt werden. Beide durch das Gehäuse des Ventils führende Leitungen sind vollständig molchbar, das zylindrische Ventilglied jedoch nicht.

Aus EP 0 761 592 A1 ist eine Verteilvorrichtung zur wahlweisen Verbindung von Leitungen sowie ein Ringschieber bekannt. Der Ringschieber bildet ein Verbindungsstück für zwei senkrecht zueinander innerhalb einer Ebene geführte Rohrleitungen. Der Ringschieber weist eine kreisförmige Öffnung auf, die an den Leitungsquerschnitt einer der Leitungen derart angepasst ist, dass diese Leitung gemeinsam mit der Öffnung des Ringschiebers durch einen Molch gereinigt werden kann. Aufgrund der Ausgestaltung des Ringschiebers ist es jedoch nicht möglich, die senkrecht zu der ersten Leitung verlaufende zweite Leitung mit Hilfe eines Molches zu reinigen. Hier können somit Rückstände, insbesondere in den Ecken der im Querschnitt rechteckförmigen zweiten Leitung und an dem Ringschieber verbleiben.

Aus DE 296 03 818 U1 ist eine absperrbare Leitungsverbindung zwischen zwei sich kreuzenden, mit einem Reinigungsmolch zu reinigenden Leitungen bekannt geworden. Die beiden Leitungen sind in ihrem Kreuzungsbereich durch eine feste Verbindungsleitung miteinander verbunden, wobei ein als Absperrorgan ausgebildeter Kolben in der Verbindungsleitung hin und her bewegbar ist. Der Kolben besitzt eine Durchbohrung, deren Durchmesser gleich dem Innendurchmesser der einen Leitung ist, so dass die Durchbohrung in derjenigen Endstellung des Kolbens, in der die Bohrungsachse der Durchbohrung mit der Längsachse dieser einen Leitung zusammenfällt, einen totraumfreien Leitungsteil dieser einen Leitung bildet. In dieser Endstellung bildet außerdem das freie Kolbenende einen totraumfreien Verschluss der Leitungsöffnung der anderen Leitung, so dass beide Leitungen voneinander getrennt sind und gleichzeitig durch einen Molch zu reinigen. In einer anderen Stellung ist die Verbindungsleitung zwischen den beiden Leitungen geöffnet.

Der Erfindung liegt die Aufgabe zugrunde, ein molchbares Leitungsventil zur Verbindung zweier zueinander versetzter Molchleitungen zu schaffen, das vollständig reinigbar ist.

Die Aufgabe wird durch ein molchbares Leitungsventil mit den Merkmalen aus Anspruch 1 gelöst. Vorteilhafte Ausgestaltungen bilden den Gegenstand der Unteransprüche, der Beschreibung sowie der Figuren.

Das erfindungsgemäße molchbare Leitungsventil umfasst ein Gehäuse mit einer oberen Molchleitung und einer unteren Molchleitung, wobei die obere Molchleitung entlang einer ersten Gehäuseachse und die untere Molchleitung entlang einer zweiten Gehäuseachse verlaufen. Die erste und zweite Gehäuseachse stehen in einem Winkel zueinander und sind auf einer dritten Gehäuseachse zueinander versetzt. Die obere und die untere Molchleitung weisen an jedem Ende einen Anschluss zur Verbindung mit einer Leitung und/oder einem weiteren Leitungsventil auf. Weiterhin umfasst das Gehäuse ein die obere und untere Molchleitung verbindendes Verbindungsstück. Das erfindungsgemäße molchbare Leitungsventil umfasst weiterhin eine mit dem Gehäuse verbundene Schieberanordnung. Die Schieberanordnung umfasst einen Schieber mit einer molchbaren Durchgangsöffnung, der in einer Trennstellung der Schieberanordnung die obere und die untere Molchleitung durch Schließen des Verbindungsstücks voneinander trennt und in einer Verbindungsstellung der Schieberanordnung die obere und die untere Molchleitung durch Freigeben des Verbindungsstücks verbindet. Erfindungsgemäß trennt der Schieber in der Trennstellung der Schieberanordnung die obere und die untere Molchleitung molchbar und ohne ein Totvolumen im Verbindungsstück.

Das erfindungsgemäße molchbare Leitungsventil erlaubt eine einfache Verbindung bzw. Trennung zweier Rohrleitungen bei gleichzeitig vollständiger Molchbarkeit der Rohrleitungen. Es sind nicht nur die Molchleitungen sondern auch die Verbindung zwischen den Molchleitungen rückstandsfrei reinigbar. In der Trennstellung der Schieberanordnung trennt der Schieber die beiden zueinander versetzten Molchleitungen derart, dass die in den Molchleitungen geführten Produkte nicht in die jeweils andere Molchleitung gelangen können. Der Schieber ist dabei derart ausgebildet, dass in der Trennstellung sowohl die obere als auch die untere Molchleitung vollständig molchbar sind. Als Molchleitung ist eine Leitung zu verstehen, die grundsätzlich molchbar ist. Molchbar bedeutet wiederum, dass eine molchbare Leitung oder Armatur zur Aufnahme und Führung eines Molches geeignet ist, sowie durch den Molch im Wesentlichen rückstandsfrei gereinigt werden kann. Zudem trennt der Schieber in der Trennstellung der Schieberanordnung die obere und untere Molchleitung derart, dass in dem Verbindungsstück zwischen der oberen und unteren Molchleitung kein Totvolumen verbleibt. Das bedeutet, dass der Schieber in der Trennstellung der Schieberanordnung das Verbindungsstück derart ausfüllt, dass sich dort keine Ablagerungen von in den Molchleitungen geführten Produkten oder sonstige Rückstände bilden können. Wie erläutert, ist der Schieber trotz dessen so geformt, dass in der Trennstellung der Schieberanordnung sowohl die obere als auch die untere Molchleitung molchbar sind. Insbesondere kann in der Trennstellung der Schieberanordnung ein durch zumindest eine der Molchleitungen geführter Molch die Durchgangsöffnung des Schiebers durchtreten. Insbesondere kann hierbei der Schieber in der Trennstellung der Schieberanordnung einen Teil der Leitungswand zumindest einer der Molchleitungen, bevorzugter Weise der oberen Molchleitung, bilden. Weiterhin kann der Schieber in der Verbindungsstellung der Schieberanordnung zumindest teilweise in die untere Molchleitung ragen. Der Schieber kann das Verbindungsstück in der Verbindungsstellung der Schieberanordnung dann freigeben, indem die Durchgangsöffnung des Schiebers in den Bereich des Verbindungsstücks gebracht wird. Ein Produktfluss zwischen den Molchleitungen erfolgt dann durch das Verbindungsstück sowie durch die Durchgangsöffnung des Schiebers. Insbesondere kann der Schieber an einer der unteren Molchleitung zugewandten Unterseite einen Endabschnitt aufweisen, der in der Verbindungsstellung in die untere Molchleitung ragt. Durch ein Bewegen des Schiebers aus der Verbindungsstellung in die Trennstellung kann dieser Endabschnitt möglichst eng anliegend an der Wandung des Verbindungsstücks entlang fahren und das Verbindungsstück somit reinigen.

Die obere und untere Molchleitung verlaufen, wie erläutert, entlang zweier in einem Winkel zueinander stehender Gehäuseachsen. Diese erste und zweite Gehäuseachse können grundsätzlich in einem beliebigen Winkel zueinander stehen. Bevorzugt stehen die erste und die zweite Gehäuseachse senkrecht zueinander. Die erste und zweite Gehäuseachse sind auf einer dritten Gehäuseachse zueinander versetzt. Somit sind auch die obere und die untere Molchleitung, welche der ersten bzw. zweiten Gehäuseachse folgen, zueinander versetzt. Bevorzugt steht die dritte Gehäuseachse senkrecht auf der ersten und zweiten Gehäuseachse. Besonders bevorzugt sind alle drei Gehäuseachsen senkrecht zueinander. Grundsätzlich weisen die obere und die untere Molchleitung an jedem Ende einen Anschluss zur Verbindung mit einer Leitung und/oder einem anderen Leitungsventil auf. Das erfindungsgemäße Leitungsventil verfügt somit über vier Anschlüsse. Jedoch kann das Leitungsventil auch über weniger oder mehr Anschlüsse verfügen. Beispielsweise kann eine weitere dritte Molchleitung vorgesehen sein, welche entlang einer vierten Gehäuseachse verläuft. Die vierte Gehäuseachse kann ebenso auf der dritten Gehäuseachse gegenüber den ersten und zweiten Gehäuseachsen versetzt ausgebildet sein. Es kann dann eine Schieberanordnung mit einem Schieber mit zwei Durchgangsöffnungen vorgesehen sein.

Erfindungsgemäß trennt der Schieber die obere und untere Molchleitung in der Trennstellung der Schieberanordnung durch Schließen des Verbindungsstücks und verbindet die obere und untere Molchleitung in der Verbindungsstellung durch Freigeben des Verbindungsstücks. Über den Schieber kann also wahlweise eine Verbindung zwischen der oberen und unteren Molchleitung hergestellt werden. Somit wird in der Verbindungsstellung der Transport des Produktes von der einen in die andere Molchleitung ermöglicht. Bei der Durchführung von Produkten durch die Molchleitungen kann es zu Produktrückständen und Ablagerungen kommen. Befindet sich die Schieberanordnung in der Verbindungsstellung, so kann es auch innerhalb des Verbindungsstücks zu Ablagerungen kommen. In der Verbindungsstellung des Schieberanordnung dient der Schieber als Anschlag für einen in der oberen Molchleitung geführten Molch und für einen in der unteren Molchleitung geführten Molch. Die Bewegung des Schiebers von der Trennstellung in die Verbindungsstellung und zurück kann beispielsweise über einen elektrischen Antrieb, beispielsweise einen Schlittenantrieb, einen pneumatischen Antrieb oder einen hydraulischen Antrieb erfolgen.

Bevorzugt ist jedoch der Schieber derart ausgebildet, dass durch die Bewegung des Schiebers von der Verbindungsstellung in die Trennstellung das Verbindungsstück im Wesentlichen ohne Rückstände gereinigt wird. Der Schieber oder zumindest ein Teil des Schiebers kann hierbei derart an die Form des Verbindungsstücks angepasst sein, dass der Schieber oder ein Teil des Schiebers eventuell im Bereich des Verbindungsstücks verbliebene Rückstände mitnimmt und das Verbindungsstück so reinigt. Durch die Bewegung des Schiebers von der Verbindungs- in die Trennstellung nimmt der Schieber somit also die Rückstände aus dem Verbindungsstück in eine der Molchleitungen mit. Da der Schieber in der Trennstellung die obere und untere Molchleitung ohne ein Totvolumen im Verbindungsstück trennt, können sich in der Trennstellung der Schieberanordnung keine weiteren Rückstände im Verbindungsstück ansammeln. Da die obere und untere Molchleitung in der Trennstellung der Schieberanordnung vollmolchbar sind, werden somit auch die aus dem Verbindungsstück mitgenommenen Rückstände durch den Molch abgeführt.

Nach einer bevorzugten Ausgestaltung ist der Schieber entlang der dritten Gehäuseachse kontinuierlich zwischen der oberen und unteren Molchleitung verschiebbar ausgebildet. Insbesondere kann der Schieber kontinuierlich zwischen der Trennstellung und der Verbindungsstellung verfahren werden. Wird der Schieber von der Trennstellung in die Verbindungsstellung verfahren, so wird die Durchgangsöffnung des Schiebers immer weiter in die untere Molchleitung geführt. So kann beispielsweise der Volumenstrom des von der einen Molchleitung in die andere geführten Produktes präzise eingestellt werden.

Nach einer weiteren bevorzugten Ausgestaltung sind in der Wandung der oberen Molchleitung beidseitig des Schiebers Dichtungsträgerringe angeordnet, die in der Trennstellung die obere Molchleitung gegenüber dem Schieber abdichten. Insbesondere können in den Dichtungsträgerringen angeordnete Dichtungsringe die obere Molchleitung gegenüber dem Schieber abdichten. Durch eine Anordnung der Dichtungen in der Wandung der Molchleitung und somit in dem Gehäuse anstatt an dem Schieber, können Abnutzungserscheinungen und Beschädigungen durch Molchkontakt oder Schläge durch den Molch verringert bzw. verhindert werden. Wenn der Schieber in der Verbindungsstellung der Schieberanordnung als Anschlag für in den Molchleitungen geführte Molche verwendet wird, könnten ansonsten an dem Schieber angeordnete Dichtungen stark in Mitleidenschaft gezogen werden. Insbesondere können die Dichtungsträgerringe derart in der Wandung der oberen Molchleitung angeordnet sein, dass ein eingesetzter Dichtungsring auch entlang des Verbindungsstücks zwischen oberer und unterer Molchleitung verläuft.

Insbesondere kann das Verbindungsstück zwischen oberer und unterer Molchleitung einen Teil der Wandung der oberen und/oder der unteren Molchleitung sein. In der Trennstellung erfolgt somit eine zuverlässige Abdichtung des Verbindungsstücks durch den Schieber, insbesondere durch einen Endabschnitt des Schiebers.

Nach einer bevorzugten Ausgestaltung weist die Durchgangsöffnung des Schiebers einen im Wesentlichen kreisförmigen Querschnitt auf, der in der Trennstellung der Schieberanordnung einen Teil der oberen Molchleitung bildet. Die Durchgangsöffnung des Schiebers kann also in der Trennstellung der Schieberanordnung in möglichst exakter Übereinstimmung mit dem Querschnitt der oberen Molchleitung stehen. Dies gewährleistet eine zuverlässige und effektive Molchbarkeit der oberen Molchleitung einschließlich der Durchgangsöffnung des Schiebers.

Nach einer bevorzugten Ausgestaltung weist der Schieber an einer der unteren Molchleitung zugewandten Unterseite einen an die untere Molchleitung angepassten Endabschnitt auf, der in der Trennstellung bündig mit der unteren Molchleitung abschließt, so dass die untere Molchleitung mitsamt dem Endabschnitt molchbar ist. Insbesondere kann der Endabschnitt des Schiebers einen Teil der Wandung der unteren Molchleitung bilden. Durch diese Ausgestaltung ist gewährleistet, dass auch die untere Molchleitung in der Trennstellung der Schieberanordnung vollständig und effektiv molchbar ist. Weist die Durchgangsöffnung des Schiebers zudem einen im Wesentlichen kreisförmigen Querschnitt auf, der in der Trennstellung der Schieberanordnung einen Teil der oberen Molchleitung bildet, so ist der Schieber durch Molche im Wesentlichen vollständig reinigbar.

In einer bevorzugten Ausgestaltung besitzt der Schieber eine quaderförmige Bauform, die im Vergleich beispielsweise zu einer zylindrischen Bauform Platz spart. Auch erlaubt die quaderförmige Bauform mit ihrem rechteckigen Querschnitt große Anlage- und Berührflächen, die ein schonendes Stoppen von aufgefangenen Molchen erlauben.

Nach einer weiteren Ausgestaltung umfasst die Schieberanordnung eine Betätigungseinheit sowie eine Ventilplatte zur Anbringung der Schieberanordnung an dem Gehäuse. Die Betätigungseinheit kann insbesondere eine Kolbenstange, eine Feder und einen Betätigungsknopf umfassen. Durch die Betätigungseinheit kann der Schieber von der Trennstellung in die Verbindungsstellung und von der Verbindungsstellung in die Trennstellung verfahren werden. Auch kann die Betätigungseinheit einen elektrischen Antrieb, beispielsweise einen Schlittenantrieb, einen pneumatischen Antrieb oder einen hydraulischen Antrieb umfassen, durch welchen der Schieber zwischen Trennstellung und Verbindungsstellung verfahren werden kann. Die Schieberanordnung kann dabei so ausgebildet sein, dass der Schieber in seiner Grundstellung, also ohne äußere Krafteinwirkung, stets in der Trennstellung ist. Durch Auslösen der Betätigungseinheit kann der Schieber somit kontinuierlich von der Trennstellung in die Verbindungsstellung verfahren werden. Insbesondere kann die Schieberanordnung und somit der Schieber, beispielsweise durch eine vorgespannte Feder, in der Grundstellung und damit in der Trennstellung gehalten werden. Eine Verbindung der oberen und unteren Molchleitung ist also nur durch eine Betätigung der Betätigungseinheit möglich. Ein selbständiges Öffnen des Schiebers durch inneren Druck ist nicht möglich. Die Verbindung von oberer und unterer Molchleitung erfolgt ausschließlich über die Durchgangsöffnung in dem Schieber. Dies ist insbesondere von Vorteil, da somit Druckschwankungen des in den Molchleitungen geförderten Produkts nicht für eine ungewollte Schieberbewegung und somit für Undichtigkeiten sorgen können. Die gesamte Schieberanordnung kann über die Ventilplatte an dem Gehäuse angebracht werden. Dies kann grundsätzlich durch beliebige Verbindungsmittel, beispielsweise durch Schrauben oder Nieten, geschehen. Nach einer besonders bevorzugten Ausgestaltung ist die gesamte Schieberanordnung lösbar mit dem Gehäuse verbunden. Insbesondere kann die gesamte Schieberanordnung als Modul ausgebildet sein. Es kann somit die gesamte Schieberanordnung aus dem Gehäuse des Leitungsventils entnommen werden. Die Schieberanordnung ist dann besonders einfach zugänglich und kann leicht gewartet oder ersetzt werden.

In einer weiteren Ausgestaltung ist an mindestens einem der Anschlüsse ein Distanzrohr zur Verbindung mit einer Rohrleitung und/oder einem weiteren Leitungsventil angeordnet. Zudem oder alternativ kann an mindestens einem der Anschlüsse eine Anschlussdichtung zur dichtenden Verbindung der jeweiligen Molchleitung mit einer mit dem jeweiligen Anschluss verbindbaren Rohrleitung und/oder einem weiteren Leitungsventil angeordnet sein. Insbesondere kann das Gehäuse des Leitungsventils im Wesentlichen quaderförmig ausgebildet sein. Somit können mehrere solcher Leitungsventile ohne ein weiteres Verbindungsrohr direkt miteinander verbunden werden.

Nach einer weiteren Ausgestaltung ist in dem Gehäuse mindestens eine Druckleitung zur Einbringung eines Drucks in die obere und/oder untere Molchleitung vorgesehen. Über die Druckleitung kann beispielsweise Druckluft oder Wasser eingebracht werden. Das Einbringen von Druck dient dem Antrieb von Molchen in den Molchleitungen. Wird der Schieber in der Verbindungsstellung als Anschlag für einen oder mehrere Molche verwendet, so kann über eine solche Druckleitung ein zur Rückführung oder Weiterführung des Molches notwendiger Druck in der oberen und/oder unteren Molchleitung aufgebaut werden. Dient der Schieber als Anschlag für von beiden Seiten durch die jeweilige Molchleitung geführte Molche, so können diese Molche durch Einbringung eines gezielten Drucks wieder getrennt werden.

Die Erfindung betrifft weiterhin einen vollmolchbaren Verteiler mit einer Vielzahl von reihen- und spaltenweise angeordneten Leitungsanschlüssen, wobei die reihenweise angeordneten Leitungsanschlüsse und die spaltenweise angeordneten Leitungsanschlüsse in übereinanderliegenden Ebenen angeordnet sind. Der vollmolchbare Verteiler weist eine Vielzahl von molchbaren Leitungsventilen nach Anspruch 1 auf, die jeweils ein Paar von gegenüberliegenden Anschlüssen in beiden Ebenen besitzen, von denen ein Paar mit den Anschlüssen des Verteilers in einer Zeile und das andere Paar mit den Anschlüssen des Verteilers in einer Reihe verbindbar ist. Jedes der Leitungsventile verbindet mindestens einen Anschluss in der ersten Ebene mit mindestens einem Anschluss in der zweiten Ebene oder trennt mindestens einen Anschluss in der ersten Ebene mit mindestens einem Anschluss in der zweiten Ebene, abhängig von seiner Schieberstellung.

Nach einer bevorzugten Ausgestaltung ist an mindestens einem Ende einer sich zeilen- oder spaltenweise durch den Verteiler und/oder die Leitungsventile erstreckenden Verbindung eine Molchfang- und Sendestation angeordnet.

Nach einer weiteren bevorzugten Ausgestaltung sind die Leitungsventile in einem rechteckigen Gestell angeordnet, an dessen Seiten die Leitungsanschlüsse des Verteilers vorgesehen sind.

Nach einer weiteren Ausgestaltung ist mindestens ein Betätigungsschlitten vorgesehen, der zeilen- oder spaltenweise zu einem Leitungsventil verfahrbar ist, um über eine Betätigungseinheit des Leitungsventils den Schieber in eine definierte Stellung zu bringen.

Die Erfindung wird nachfolgend anhand eines Ausführungsbeispiels näher erläutert.

Es zeigen:
- Fig. 1: drei Ansichten eines erfindungsgemäßen molchbaren Leitungsventils in der Trennstellung,
- Fig. 2: drei Ansichten der Ausgestaltung des Leitungsventils aus Fig. 1 in der Verbindungsstellung,
- Fig. 3: eine perspektivische Ansicht eines vollmolchbaren Verteilers mit einer Anzahl erfindungsgemäßer Leitungsventile, und
- Fig. 4: eine Frontansicht des vollmolchbaren Verteilers aus Fig. 3.

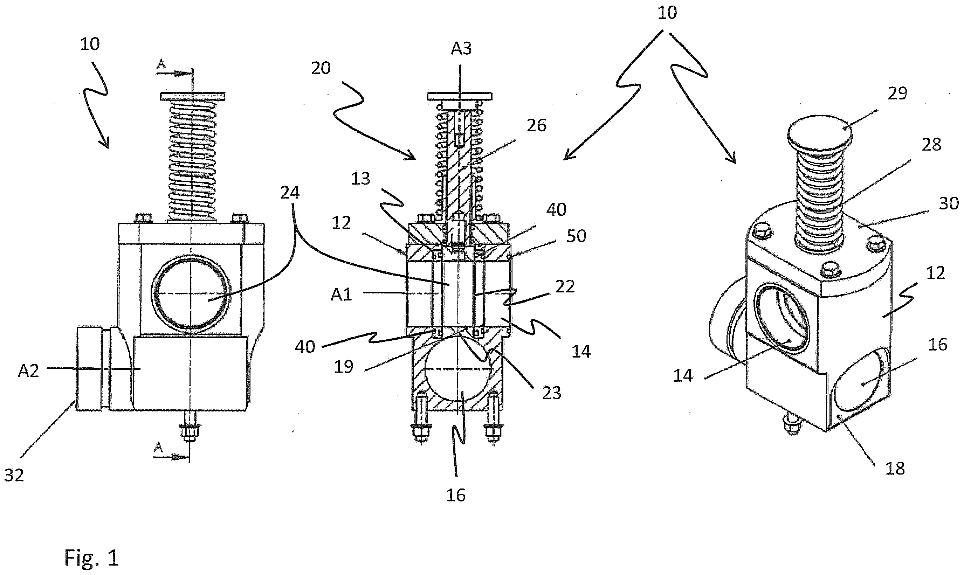

Fig. 1 zeigt drei Ansichten eines erfindungsgemäßen molchbaren Leitungsventils 10. Das linke Bild der Fig. 1 zeigt eine Seitenansicht, das mittlere Bild eine Schnittansicht und das rechte Bild eine perspektivische Ansicht des Leitungsventils 10. In dem Gehäuse 12 ist sowohl eine obere Molchleitung 14 als auch eine untere Molchleitung 16 angeordnet. Die obere Molchleitung 14 verläuft entlang der Achse A1, während die untere Molchleitung 16 entlang der Achse A2 verläuft. Die Achsen A1 und A2 stehen senkrecht zueinander. Zudem sind die Achsen A1 und A2 und somit die Molchleitungen 14 und 16 entlang der Gehäuseachse A3 zueinander versetzt. Die dritte Gehäuseachse A3 steht senkrecht auf der Gehäuseachse A1 und der Gehäuseachse A2. Weiterhin ist eine Schieberanordnung 20 ersichtlich. Die Schieberanordnung 20 umfasst eine Kolbenstange 26, eine Feder 28 sowie einen Betätigungsknopf 29 und weiterhin eine Ventilplatte 30 und einen Schieber 22. Die Schieberanordnung 20 ist über die Ventilplatte 30 mit vorliegend vier Schrauben mit dem Gehäuse 12 lösbar verbunden. Der Schieber 22 ist dabei in das Gehäuse 12 eingesetzt. Weiterhin umfasst der Schieber 22 eine Durchgangsöffnung 24, welche den gleichen Querschnitt wie die obere Molchleitung 14 aufweist. Die obere Molchleitung 14 und die untere Molchleitung 16 sind durch ein Verbindungsstück 19 verbunden, welches in den Darstellungen der Fig. 1 jedoch durch einen Endabschnitt 23 des Schiebers 22 geschlossen ist. Weiterhin sind Dichtungsträgerringe 40 in der Wandung der oberen Molchleitung 14 zu sehen, deren Dichtungen den Schieber gegenüber der oberen Molchleitung abdichten. Auch erfolgt über die Dichtungsträgerringe 40 eine Abdichtung des Endabschnitts 23 des Schiebers 22 gegenüber der Wandung des Verbindungsstücks 19. Anschlussdichtungen 50 ermöglichen die dichtende Verbindung des Ventils mit weiteren Leitungsventilen oder Rohrleitungen. Mit Bezugszeichen 32 ist zudem ein Distanzrohr gekennzeichnet.

In der in Fig. 1 dargestellten Trennstellung der Schieberanordnung 20 ist der Schieber 22 derart positioniert, dass sowohl die obere als auch die untere Molchleitung 14, 16 vollständig molchbar sind. Ein durch die obere Molchleitung 14 geführter Molch durchtritt hierbei die Durchgangsöffnung des Schiebers 22, welche somit ebenfalls gereinigt wird. Der Endabschnitt 23 des Schiebers 22 verschließt in dieser Trennstellung das Verbindungsstück 19 vollständig. Der Endabschnitt 23 bzw. eine Unterseite des Endabschnitts 23 ist dabei derart an die Form der unteren Molchleitung 16 angepasst, dass er bündig mit der unteren Molchleitung 16 abschließt. Der Endabschnitt 23 bzw. die Unterseite des Endabschnitts 23 bildet in der Trennstellung der Schieberanordnung somit einen Teil der Wandung der unteren Molchleitung 16. Somit ist in der Trennstellung auch die untere Molchleitung 16 einschließlich der Unterseite des Endabschnitts 23 vollständig molchbar.

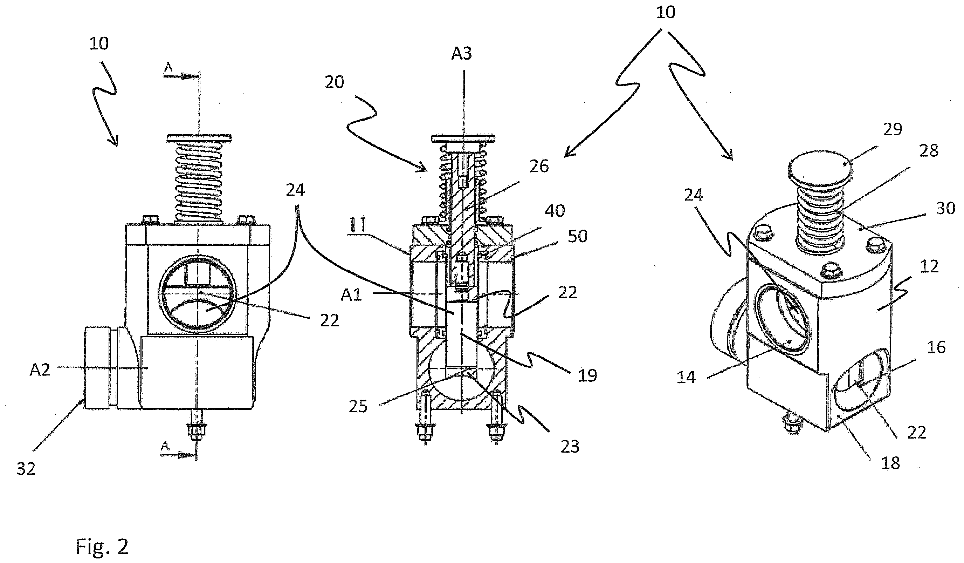

Wirkt nun eine Kraft auf den Betätigungsknopf 29, so wird entgegen der Federkraft der Feder 28 die Kolbenstange 26 weiter in das Gehäuse 12 eingeführt. Dadurch wird wiederum der mit der Kolbenstange 26 verbundene Schieber 22 von seiner Ausgangsstellung, also der Trennstellung, in die untere Molchleitung 16 hineingefahren. Dies ist den Darstellungen in Fig. 2 zu entnehmen. Es sind hier die gleichen Ansichten wie in Fig. 1 gezeigt, jedoch befindet sich die Schieberanordnung in der Verbindungsstellung. Der Schieber 22 ist so weit in die untere Molchleitung 16 verfahren, dass der Endabschnitt 23 des Schiebers 22 das Verbindungsstück 19 freigibt und so ein Produktfluss zwischen oberer und unterer Molchleitung 14, 16 durch die Durchgangsöffnung 24 des Schiebers 22 ermöglicht wird. Durch ein Verfahren des Schiebers entlang der Achse A3 kann der Volumenstrom des Produktes verändert werden. In dieser Position kann der Schieber 22 als Anschlag für Molche dienen. Sowohl an der oberen Molchleitung 14 wie auch an der unteren Molchleitung 16 können Molche von einer oder von beiden Seiten durch die Molchleitungen bis hin zum Schieber 22 geführt werden. In der Verbindungsstellung stoppt der Schieber 22 die Molche. Da der Schieber 22 selbst keine Dichtungen trägt, können diese durch Anschlag der Molche nicht in Mitleidenschaft gezogen werden. Die Dichtungen sind stattdessen, wie erläutert, über Dichtungsträgerringe 40 in der Wandung der oberen Molchleitung 14 angeordnet.

Wird die Schieberanordnung 20 nun von der Verbindungsstellung zurück in die Trennstellung verfahren, so bewegt sich der Schieber 22 wieder aus der unteren Molchleitung 16 heraus, zurück in Richtung der oberen Molchleitung 14. Der Endabschnitt 23 des Schiebers 22 nimmt dabei eventuell in dem Verbindungsstück 19 verbliebene Rückstände mit in die obere Molchleitung 14. Diese Rückstände sammeln sich hierbei beispielsweise auf einer oberen Fläche 25 des Randabschnitts 23, welche in der Trennstellung der Schieberanordnung einen Teil der Wandung der oberen Molchleitung 14 bildet. Durch ein anschließendes Molchen der oberen Molchleitung 14 werden auch diese Rückstände zuverlässig entfernt. Das erfindungsgemäße molchbare Leitungsventil ermöglicht somit also das rückstandslose Reinigen nicht nur der Molchleitungen selbst, sondern auch des Verbindungsstücks zwischen den Molchleitungen.

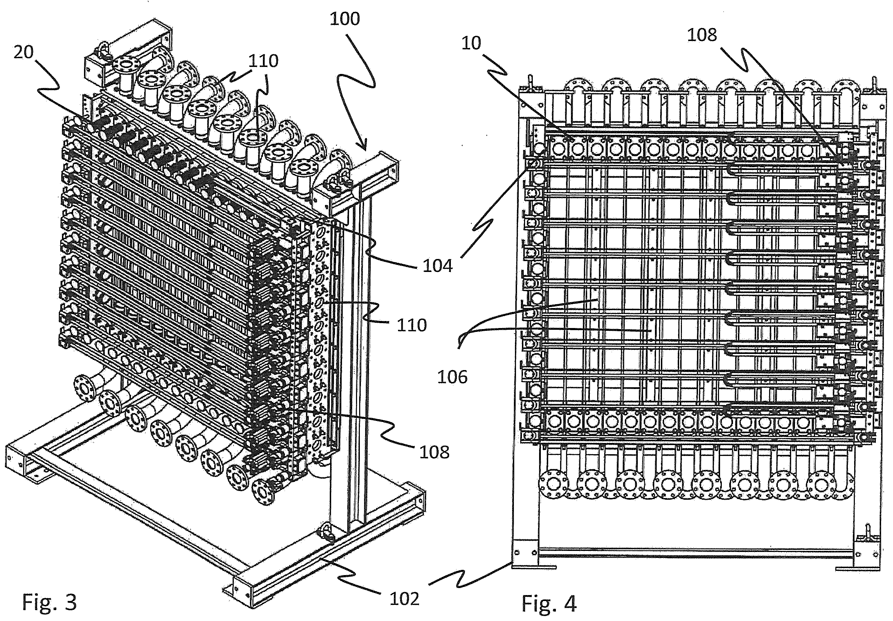

Die Figuren 3 und 4 zeigen einen erfindungsgemäßen vollmolchbaren Verteiler mit einer Anzahl erfindungsgemäßer Leitungsventile 10. Der Verteiler umfasst einen Rahmen 100, der auf Füßen 102 steht. Weiterhin sind in dem Verteiler in übereinanderliegenden Ebenen angeordnete zeilenweise verlaufende Leitungen 104 und spaltenweise verlaufende Leitungen 106 geführt, die in Leitungsanschlüsse 110 münden. In dem vorliegenden Ausführungsbeispiel sind die oberste und unterste zeilenweise verlaufende Leitung 104 vollständig durch erfindungsgemäße Leitungsventile 10 gebildet. Die Anschlüsse der oberen Molchleitung der Leitungsventile liegen hierbei direkt aneinander. Die Leitungsventile 10 können jedoch auch über Leitungselemente und/oder Distanzrohre miteinander verbunden sein. Insbesondere kann eine Verbindung der Leitungsventile zu den in der unteren Ebene spaltenweise verlaufenden Leitungen 106 über Distanzrohre erfolgen. Es können auch mehr oder weniger Leitungsventile vorgesehen sein. Insbesondere können auch sämtliche zeilenweise bzw. spaltenweise verlaufende Leitungen 104, 106 durch die obere bzw. untere Molchleitung der erfindungsgemäßen Leitungsventile gebildet sein.

Durch die Leitungsventile 10 können die zeilenweise und spaltenweise verlaufenden Leitungen 104, 106 miteinander wahlweise verbunden oder getrennt werden. Hierfür fährt ein Betätigungsschlitten 108 zeilenweise zu dem zu betätigenden Leitungsventil 10 und betätigt über die Schieberanordnung 20 den Schieber des entsprechenden Leitungsventils.

## Patentansprüche

1. Molchbares Leitungsventil (10) mit
- einem Gehäuse (12) mit einer oberen Molchleitung (14) und einer unteren Molchleitung (16) und einem die obere und untere Molchleitung (14, 16) verbindenden Verbindungsstück (19), wobei die obere Molchleitung (14) entlang einer ersten Gehäuseachse (A1) verläuft und die untere Molchleitung (16) entlang einer zweiten zur ersten Gehäuseachse (A1) in einem Winkel stehenden Gehäuseachse (A2) verläuft, und die erste und zweite Gehäuseachse (A1, A2) auf einer dritten Gehäuseachse (A3) zueinander versetzt sind, wobei die obere und untere Molchleitung (14, 16) an jedem Ende einen Anschluss (18) zur Verbindung mit einer Leitung und/oder einem weiteren Leitungsventil aufweisen,
- einer mit dem Gehäuse (12) verbundenen Schieberanordnung (20) umfassend einen Schieber (22) mit einer molchbaren Durchgangsöffnung (24), wobei in einer Trennstellung der Schieberanordnung (20) der Schieber (22) die obere und die untere Molchleitung (14, 16) durch Schließen des Verbindungsstücks (19) voneinander trennt und in einer Verbindungsstellung der Schieberanordnung (20) der Schieber (22) die obere und die untere Molchleitung (14, 16) durch Freigeben des Verbindungsstücks (19) verbindet,
- wobei in der Trennstellung der Schieberanordnung (20) der Schieber (22) die obere und die untere Molchleitung (14, 16) molchbar und ohne ein Totvolumen im Verbindungsstück (19) trennt,
- **dadurch gekennzeichnet, dass** der Schieber (22) in der Verbindungsstellung der Schieberanordnung (20) als Anschlag für einen in der oberen Molchleitung (14) geführten Molch und für einen in der unteren Molchleitung (16) geführten Molch ausgebildet ist.

2. Molchbares Leitungsventil nach Anspruch 1, **dadurch gekennzeichnet, dass** der Schieber (22) derart ausgebildet ist, das durch die Bewegung des Schiebers (22) von der Verbindungsstellung in die Trennstellung das Verbindungsstück (19) ohne Rückstände gereinigt wird.

3. Molchbares Leitungsventil nach Anspruch 1 oder 2, **dadurch gekennzeichnet, dass** der Schieber (22) entlang der dritten Gehäuseachse (A3) kontinuierlich zwischen der oberen und der unteren Molchleitung (14, 16) verschiebbar ausgebildet ist.

4. Molchbares Leitungsventil nach einem der vorhergehenden Ansprüche, **dadurch gekennzeichnet, dass** in der Wandung (13) der oberen Molchleitung (14) beidseitig des Schiebers (22) Dichtungsträgerringe (40) angeordnet sind, die in der Trennstellung die obere Molchleitung (14) gegenüber dem Schieber (22) abdichten.

5. Molchbares Leitungsventil nach einem der vorhergehenden Ansprüche, **dadurch gekennzeichnet, dass** die Durchgangsöffnung (24) des Schiebers (22) in der Verbindungsstellung die obere und untere Molchleitung mit einander verbindet.

6. Molchbares Leitungsventil nach Anspruch 5, **dadurch gekennzeichnet, dass** die obere und untere Molchleitung in der Verbindungsstellung nur über die Durchgangsöffnung (24) des Schiebers miteinander verbunden sind.

7. Molchbares Leitungsventil nach einem der vorhergehenden Ansprüche, **dadurch gekennzeichnet, dass** der Schieber (22) an einer der unteren Molchleitung (16) zugewandten Unterseite einen an die untere Molchleitung (16) angepassten Endabschnitt (23) aufweist, der in der Trennstellung bündig mit der unteren Molchleitung (16) abschließt, sodass die untere Molchleitung (16) mitsamt dem Endabschnitt (23) molchbar ist.

8. Molchbares Leitungsventil nach einem der vorhergehenden Ansprüche, **dadurch gekennzeichnet, dass** die Schieberanordnung (20) eine Betätigungseinheit, insbesondere umfassend eine Kolbenstange (26), eine Feder (28) und einen Betätigungsknopf (29), sowie eine Ventilplatte (30) zur Anbringung der Schieberanordnung (20) an dem Gehäuse (12) aufweist.

9. Molchbares Leitungsventil nach Anspruch 7, **dadurch gekennzeichnet, dass** die gesamte Schieberanordnung (20) lösbar mit dem Gehäuse (12) verbunden ist.

10. Molchbares Leitungsventil nach einem der vorhergehenden Ansprüche, **dadurch gekennzeichnet, dass** an mindestens einem der Anschlüsse (18) ein Distanzrohr (32) angeordnet ist und/oder dass an mindestens einem der Anschlüsse (18) eine Anschlussdichtung (50) zur dichtenden Verbindung der jeweiligen Molchleitung (14, 16) mit einer mit dem jeweiligen Anschluss (18) verbindbaren Leitung und/oder mit einem weiteren Leitungsventil angeordnet ist.

11. Molchbares Leitungsventil nach einem der vorhergehenden Ansprüche, **dadurch gekennzeichnet, dass** in dem Gehäuse (12) mindestens eine Druckleitung, insbesondere eine Druckluftleitung, zur Einbringung eines Drucks in die obere und/oder untere Molchleitung (14, 16) angeordnet ist.

12. Vollmolchbarer Verteiler mit einer Vielzahl von reihen- und spaltenweise angeordneten Leitungsanschlüssen (110), wobei die reihenweise angeordneten Leitungsanschlüsse und die spaltenweise angeordneten Leitungsanschlüsse in übereinanderliegenden Ebenen angeordnet sind, und der Verteiler eine Vielzahl von molchbaren Leitungsventilen (10) nach einem der Ansprüche 1 bis 11 aufweist, die jeweils ein Paar von gegenüberliegenden Anschlüssen (18) in beiden Ebenen besitzen, von denen ein Paar mit den Anschlüssen des Verteilers in einer Zeile und das andere Paar mit den Anschlüssen des Verteilers in einer Reihe verbindbar ist, und jedes der Leitungsventile abhängig von seiner Schieberstellung mindestens einen Anschluss (18) in der ersten Ebene mit mindestens einem Anschluss (18) in der zweiten Ebene verbindet oder trennt.

13. Vollmolchbarer Verteiler nach Anspruch 12, **dadurch gekennzeichnet, dass** an mindestens einem Ende einer sich zeilen- oder spaltenweise durch den Verteiler und/oder die Leitungsventile erstreckenden Verbindung eine Molchfang- und Sendestation angeordnet ist.

14. Vollmolchbarer Verteiler nach Anspruch 12 oder 13, **dadurch gekennzeichnet, dass** die Leitungsventile (10) in einem rechteckigen Gestell (100) angeordnet sind, an dessen Seiten die Leitungsanschlüsse (110) des Verteilers vorgesehen sind.

15. Vollmolchbarer Verteiler nach einem der Ansprüche 12 bis 14, **dadurch gekennzeichnet, dass** mindestens ein Betätigungsschlitten (108) vorgesehen ist, der zeilen- oder spaltenweise zu einem Leitungsventil (10) verfahrbar ist, um über eine Betätigungseinheit des Leitungsventils (10) die Schieberanordnung (20) in eine definierte Stellung zu bringen.

## Claims

1. A piggable inline valve (10) with
• a casing (12) with an upper pigging line (14) and a lower pigging line (16) and a connection piece (19) connecting the upper and the lower pigging line (14, 16), wherein the upper pigging line (14) extends along a first casing axis (A1), and the lower pigging line (16) extends along a second casing axis (A2) in an angle to the first casing axis (A1), and the first and the second casing axes (A1, A2) are offset from each other on a third casing axis (A3), wherein the upper and the lower pigging line (14, 16) have a fitting (18) at each end for connection to a line and/or a further inline valve,
• a slider system (20) connected to the casing (12), comprising a slider (22) with a piggable passage opening (24), wherein in a separating position of the slider system (20), the slider (22) separates the upper and the lower pigging line (14, 16) from each other by closing the connection piece (19), and in a connecting position of the slider system (20) the slider (22) connects the upper and the lower pigging line (14, 16) by releasing the connection piece (19),
• wherein in the separating position of the slider system (20), the slider (22) separates the upper and the lower pigging line (14, 16) in a piggable way and without a dead volume in the connection piece (19),
• **characterised in that** in the connecting position of the slider system (20), the slider (22) is realised as a stop for a pig guided in the upper pigging line (14), and for a pig guided in the lower pigging line (16).

2. The piggable inline valve according to claim 1, **characterised in that** the slider (22) is realised such that the connection piece (19) is cleaned without residual materials by the movement of the slider (22) from the connecting position into the separating position.

3. A piggable inline valve according to claim 1 or 2, **characterised in that** the slider (22) is made so as to be continuously slidable between the upper and the lower pigging line (14, 16) along the third casing axis (A3).

4. A piggable inline valve according to any one of the preceding claims, **characterised in that** in the wall (13) of the upper pigging line (14), sealing carrier rings (40) are arranged on both sides of the slider (22) which seal the upper pigging line (14) with respect to the slider (22) in the separating position.

5. A piggable inline valve according to any one of the preceding claims, **characterised in that** the passage opening (24) of the slider (22) connects the upper and the lower pigging line with each other in the connecting position.

6. The piggable inline valve according to claim 5, **characterised in that** in the connecting position, the upper and the lower pigging line are connected to each other only via the passage opening (24) of the slider.

7. A piggable inline valve according to any one of the preceding claims, **characterised in that** on a lower side facing the lower pigging line (16), the slider (22) has an end portion (23) matching the lower pigging line (16), which is flush to the lower pigging line (16) in the separating position, so that the lower pigging line (16) can be pigged together with the end portion (23).

8. A piggable inline valve according to any one of the preceding claims, **characterised in that** the slider system (20) has an actuating unit, comprising in particular a piston rod (26), a spring (28) and an actuating button (29) as well as a valve plate (30) for fastening the slider system (20) on the casing (12).

9. The piggable inline valve according to claim 7, **characterised in that** the entire slider system (20) is detachably connected to the casing (12).

10. A piggable inline valve according to any one of the preceding claims, **characterised in that** a distance pipe (32) is arranged on at least one of the fittings (18), and/or that a fitting seal (50) for sealingly connecting the respective pigging line (14, 16) to a line connectible with the respective fitting (18) and/or to another inline valve is arranged on at least one of the fittings (18).

11. A piggable inline valve according to any one of the preceding claims, **characterised in that** at least one pressure line is arranged in the casing (12), in particular a compressed air line for applying a pressure into the upper and/or the lower pigging line (14, 16).

12. A completely piggable manifold with a plurality of line fittings (110) arranged in series and rows, wherein the line fittings arranged in series and the line fittings arranged in rows are arranged in superimposed planes, and the manifold has a plurality of piggable inline valves (10) according to any one of the claims 1 to 11, each of them having a pair of opposite fittings (18) in both planes, from which one pair is connectible to the fittings of the manifold in a row and the other pair to the fittings of the manifold in a series, and depending on its slider position, each of the inline valves connects to or separates at least one fitting (18) in the first plane from at least one fitting (18) in the second plane.

13. The completely piggable manifold according to claim 12, **characterised in that** a pig catching and pig emitting station is arranged on at least one end of a connection extending in series or rows through the manifold and/or the inline valves.

14. A completely piggable manifold according to claim 12 or 13, **characterised in that** the inline valves (10) are arranged in a rectangular frame (100), on the sides of which the line fittings (110) of the manifold are provided.

15. A completely piggable manifold according to any one of the claims 12 to 14, **characterised in that** at least one actuating sledge (108) is provided, which can be advanced in series or rows to an inline valve (10) in order to bring the slider system (20) into a defined position via an actuating unit of the inline valve (10).

## Revendications

1. Soupape en ligne raclable (10) avec
• un boîtier (12) avec une ligne de raclage supérieure (14) et une ligne de raclage inférieure (16) et une pièce de jonction (19) reliant la ligne de raclage supérieure et la ligne de raclage inférieure (14, 16), dans lequel la ligne de raclage supérieure (14) s'étend le long d'un premier axe de boîtier (A1), et la ligne de raclage inférieure (16) s'étend le long d'un deuxième axe de boîtier (A2) en un angle au premier axe de boîtier (A1), et les axes de boîtier premier et deuxième (A1, A2) sont décalés l'un de l'autre dans un troisième axe de boîtier (A3), les lignes de raclage supérieure et inférieure (14, 16) ayant un raccord (18) dans chacune extrémité pour connexion à une ligne et/ou une autre soupape en ligne,
• une structure à curseur (20) reliée au boîtier (12), comportant un curseur (22) avec une ouverture de passage raclable (24), dans laquelle chez une position de coupure de la structure à curseur (20), le curseur (22) sépare les lignes de raclage supérieure et inférieure (14, 16) l'une de l'autre en fermant la pièce de jonction (19), et dans une position de jonction de la structure à curseur (20), le curseur (22) relie les lignes de raclage supérieure et inférieure (14, 16) en libérant la pièce de jonction (19),
• dans la position de coupure de la structure à curseur (20), le curseur (22) séparant les lignes de raclage supérieure et inférieure (14, 16) de manière raclable et sans aucun volume mort dans la pièce de jonction (19),
• **caractérisée en ce que** dans la position de jonction de la structure à curseur (20), le curseur (22) est conçu comme une butée pour un racleur guidé dans la ligne de raclage supérieure (14), et pour un racleur guidé dans la ligne de raclage inférieure (16).

2. Soupape en ligne raclable selon la revendication 1, **caractérisée en ce que** le curseur (22) est conçu de sorte que la pièce de jonction (19) est nettoyée sans résidus par le mouvement du curseur (22) de la position de jonction à la position de coupure.

3. Soupape en ligne raclable selon la revendication 1 ou 2, **caractérisé en ce que** le curseur (22) est conçu à être continûment déplaçable entre les lignes de raclage supérieure et inférieure (14, 16) le long du troisième axe de boîtier (A3).

4. Soupape en ligne raclable selon l'une quelconque des revendications précédentes, **caractérisée en ce que** dans la paroi (13) de la ligne de raclage supérieure (14), des porteurs d'anneaux d'étanchéité (40) sont arrangés sur les deux cotés du curseur (22), qui font la ligne de raclage supérieure (14) étanche par rapport au curseur (22) dans la position de coupure.

5. Soupape en ligne raclable selon l'une quelconque des revendications précédentes, **caractérisé en ce que** l'ouverture de passage (24) du curseur (22) relie les lignes de raclage supérieure et inférieure l'une à l'autre dans la position de jonction.

6. Soupape en ligne raclable selon la revendication 5, **caractérisé en ce que** dans la position de jonction, les lignes de raclage supérieure et inférieure sont reliées l'une à l'autre seulement à travers l'ouverture de passage (24) du curseur.

7. Soupape en ligne raclable selon l'une quelconque des revendications précédentes, **caractérisée en ce que** sur un coté inférieur faisant face à la ligne de raclage inférieure (16), le curseur (22) a une portion d'extrémité (23) adaptée à la ligne de raclage inférieure (16), qui ferme en affleurant avec la ligne de raclage inférieure (16) dans la position de coupure, de sorte que la ligne de raclage inférieure (16) peut être raclée ainsi que la portion d'extrémité (23).

8. Soupape en ligne raclable selon l'une quelconque des revendications précédentes, **caractérisée en ce que** la structure à curseur (20) a une unité d'actionnement, notamment comportant une tige de piston (26), un ressort (28) et un bouton d'actionnement (29) aussi bien qu'une plaque de soupape (30) pour fixer la structure à curseur (20) sur le boîtier (12).

9. Soupape en ligne raclable selon la revendication 7, **caractérisée en ce que** l'entière structure à curseur (20) est reliée au boîtier (12) de manière démontable.

10. Soupape en ligne raclable selon l'une quelconque des revendications précédentes, **caractérisée en ce que** un tube d'écartement (32) est arrangé sur au moins un des raccords (18), et/ou qu'un joint d'étanchéité du raccord (50) pour relier la ligne de raclage (14, 16) respective de manière étanche à une ligne qui peut être raccordée au raccord (18) respectif et/ou à une autre soupape en ligne est arrangé(e) sur au moins un des raccords (18).

11. Soupape en ligne raclable selon l'une quelconque des revendications précédentes, **caractérisé en ce que** au moins une ligne de pression est arrangée dans le boîtier (12), notamment une ligne d'air comprimé pour appliquer une pression sur la ligne de raclage supérieure et/ou la ligne de raclage inférieure (14, 16).

12. Distributeur complètement raclable avec une pluralité de raccords de ligne (110) arrangés par rangée et par colonnes, les raccords de ligne arrangés par rangée et les raccords de ligne arrangés par colonnes étant arrangés dans des surfaces superposées, et le distributeur ayant une pluralité de soupapes de ligne raclables (10) selon l'une quelconque des revendications 1 à 11, dont chacune a une paire de raccords (18) opposés sur les deux surfaces, dont une paire peut être raccordée aux raccords du distributeur dans une rangée et l'autre paire aux raccords du distributeur dans une colonne, et en fonction de sa position de curseur, chacune des soupapes de ligne relie ou sépare au moins un raccord (18) dans la première surface à au moins un raccord (18) dans la deuxième surface.

13. Distributeur complètement raclable selon la revendication 12, **caractérisé en ce que** un poste à racleur attrapant et émettant est arrangé par rangées ou par colonnes sur au moins une extrémité d'une connexion s'étendant à travers le distributeur et/ou les soupapes de ligne.

14. Distributeur complètement raclable selon la revendication 12 ou 13, **caractérisé en ce que** les soupapes de ligne (10) sont arrangées dans un cadre (100) rectangulaire, sur les cotés duquel sont prévus les raccords de ligne (110) du distributeur.

15. Distributeur complètement raclable selon l'une quelconque des revendications 12 à 14, **caractérisé en ce que** au moins une glissière d'actionnement (108) est prévue, qui peut être avancée par rangées ou par colonnes à une soupape en ligne (10) afin de mettre la structure à curseur (20) dans une position définie via une unité d'actionnement de la soupape en ligne (10).
